(19) Europäisches Patentamt
European Patent Office
Office européen des brevets

(11)  EP 3 655 299 B1

(12)  **EUROPÄISCHE PATENTSCHRIFT**

(45) Veröffentlichungstag und Bekanntmachung des Hinweises auf die Patenterteilung:
27.03.2024  Patentblatt 2024/13

(21) Anmeldenummer: 18742763.8

(22) Anmeldetag: 13.07.2018

(51) Internationale Patentklassifikation (IPC):
*G06T 7/269* (2017.01)     *G06V 20/56* (2022.01)
*B60W 40/02* (2006.01)     *B60W 40/10* (2012.01)

(52) Gemeinsame Patentklassifikation (CPC):
**G06T 7/269; G06V 20/56;** G06T 2207/10016;
G06T 2207/30261

(86) Internationale Anmeldenummer:
PCT/EP2018/069161

(87) Internationale Veröffentlichungsnummer:
WO 2019/016104 (24.01.2019 Gazette 2019/04)

(54)  **VERFAHREN UND VORRICHTUNG ZUM ERMITTELN EINES OPTISCHEN FLUSSES ANHAND EINER VON EINER KAMERA EINES FAHRZEUGS AUFGENOMMENEN BILDSEQUENZ**

METHOD AND DEVICE FOR DETERMINING AN OPTICAL FLOW ON THE BASIS OF AN IMAGE SEQUENCE CAPTURED BY A CAMERA OF A VEHICLE

PROCÉDÉ ET DISPOSITIF DE DÉTERMINATION D'UN FLUX OPTIQUE À L'AIDE D'UNE SÉQUENCE D'IMAGES ENREGISTRÉE PAR UNE CAMÉRA D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2017  DE 102017212175**

(43) Veröffentlichungstag der Anmeldung:
**27.05.2020  Patentblatt 2020/22**

(73) Patentinhaber: **Robert Bosch GmbH**
**70442 Stuttgart (DE)**

(72) Erfinder:
• DORNBUSCH, Daniel
70437 Stuttgart (DE)
• HERBON, Christopher
71034 Boeblingen (DE)

(56) Entgegenhaltungen:
EP-A1- 2 899 692          EP-A2- 1 617 376
US-A1- 2006 013 480     US-A1- 2017 186 169

**Beschreibung**

Stand der Technik

Die Erfindung geht aus von einem Verfahren oder einer Vorrichtung nach Gattung der unabhängigen Ansprüche. Gegenstand der vorliegenden Erfindung ist auch ein Computerprogramm.

Moderne Fahrzeuge können mit Videokameras zum Zweck der Fahrerassistenz oder des autonomen Fahrens ausgestattet sein. Die von den Videokameras aufgenommenen Bildsequenzen können beispielsweise verarbeitet werden, um einen optischen Fluss zu berechnen. EP1617376 A2 und EP2899692 A1 offenbaren ein Verfahren zum Ermitteln eines optischen Flusses anhand einer von einer Kamera eines Fahrzeugs aufgenommenen Bildsequenz, gemäß der Präambel von Anspruch 1.

Offenbarung der Erfindung

Vor diesem Hintergrund werden mit dem hier vorgestellten Ansatz ein Verfahren zum Ermitteln eines optischen Flusses anhand einer von einer Kamera eines Fahrzeugs aufgenommenen Bildsequenz, eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Ermitteln eines optischen Flusses anhand einer von einer Kamera eines Fahrzeugs aufgenommenen Bildsequenz vorgestellt, wobei das Verfahren die Schritte des Anspruchs 1 umfasst.

Unter optischem Fluss kann die Beschreibung einer Bewegung eines Pixels in einer Bildebene zwischen zwei Einzelbildern einer Bildsequenz oder zwischen einem linken Bild und einem rechten Bild einer Stereokamera verstanden werden. Der optische Fluss ist dabei abhängig von den jeweiligen zeitlichen Abständen zwischen den Einzelbildern. Bei dem Sensor kann es sich beispielsweise um die Kamera, einen Beschleunigungs-, Lenkraddreh-, Raddreh-, Radar-, Lidar-, Ultraschall-, GPS-, Licht- oder Regensensor handeln. Unter einer Fahrsituation kann eine durch bestimmte Fahrzeugparameter wie etwa Geschwindigkeit, Beschleunigung, Nickrate oder Rollrate charakterisierter Zustand des Fahrzeugs verstanden werden. Das Eingangssignal kann beispielsweise durch direkte oder indirekte Rückkopplung mit einer Fahrerassistenzfunktion des Fahrzeugs oder mit einer vorangehenden Berechnung des optischen Flusses erzeugt worden sein. Bei dem Eingangssignal kann es sich etwa um ein abhängiges oder unabhängiges Signal oder eine Kombination aus zumindest einem abhängigen Signal und einem unabhängigen Signal handeln. Abhängige Signale führen beispielsweise aufgrund ihrer Rückkopplung zu einem Regelkreis, bei dem das Ergebnis des optischen Flusses zu einem Zeitpunkt t das Ergebnis zu einem Zeitpunkt $t+\Delta t$ beeinflusst. Unter einem Zeitdifferenzwert kann eine Zeitdauer, insbesondere im Millisekundenbereich, verstanden werden. Unter einer Bildsequenz kann eine Folge zumindest zweier Einzelbilder verstanden werden. Unter einem Pixel kann ein Bildelement eines Einzelbilds verstanden werden. Die Bewegung eines Pixels zwischen zwei Einzelbildern kann als ein den optischen Fluss repräsentierender Flussvektor ermittelt werden. Die Bewegung einer Mehrzahl von Pixeln zwischen zwei Einzelbildern kann beispielsweise in Form zumindest eines Flussfeldes aus je einer Mehrzahl von Flussvektoren ermittelt werden. Dabei können die Flussvektoren gleich oder unterschiedlich lang sein.

Der hier vorgestellte Ansatz beruht auf der Erkenntnis, dass ein optischer Fluss einer von einer Fahrzeugkamera aufgenommenen Bildsequenz auf einer situationsabhängig variierbaren Zeitbasis ermittelt werden kann.

Im Gegensatz zu herkömmlichen Verfahren, bei denen unabhängig vom Inhalt einer aufgenommenen Szene und einer Eigenbewegung der Kamera eine konstante Zeitdifferenz bei der Berechnung des optischen Flusses verwendet wird, kann mittels des hier vorgestellten Ansatzes durch Wahl des zeitlichen Versatzes zwischen den Kamerabildern anhand einer Menge bestimmter Eingangssignale verhindert werden, dass es bei einer Szene mit hoher Dynamik zum Verlust des optischen Flusses kommt. Gleichzeitig kann das Genauigkeitspotenzial bei der Eigenbewegungsschätzung bei einer Szene und Kamerapose mit geringer Änderung voll ausgeschöpft werden. Die Verwendung einer dynamischen statt einer statischen Zeitdifferenz führt somit situationsabhängig zu bestmöglichen Flussdaten.

Gemäß einer Ausführungsform kann im Schritt des Bestimmens der Zeitdifferenzwert durch Verringern eines Ausgangswertes bestimmt werden, wenn das Eingangssignal eine erkannte automatische Notbremsung des Fahrzeugs oder, zusätzlich oder alternativ, eine einen Schwellenwert überschreitende Nickrate des Fahrzeugs repräsentiert. Dadurch kann der Verlust des optischen Flusses in Fahrsituationen mit hoher Dynamik verhindert werden.

Dabei kann im Schritt des Bestimmens der Zeitdifferenzwert durch Halbieren des Ausgangswertes bestimmt werden. Dadurch kann der Zeitdifferenzwert mit besonders geringem Rechenaufwand verringert werden.

Gemäß einer weiteren Ausführungsform kann im Schritt des Bestimmens das Eingangssignal verwendet werden, um den Zeitdifferenzwert abhängig von einer Rollrate des Fahrzeugs oder, zusätzlich oder alternativ, von einer Relativgeschwindigkeit zwischen dem Fahrzeug und zumindest einem weiteren Fahrzeug zu bestimmen. Dadurch kann der Verlust des optischen Flusses bei schwankendem Fahrzeug oder schwankender Kamera vermieden werden und beispielsweise auch bei niedrigen Relativgeschwindigkeiten eine ausreichend genaue Abtastung der Einzelbilder gewährleistet werden.

Das Verfahren kann einen Schritt des Änderns einer Bildwiederholrate der Kamera unter Verwendung des Zeitdifferenzwertes umfassen, um das Bildsignal zu empfangen. Dadurch können die Einzelbilder der Bildsequenz mit einer vom Zeitdifferenzwert abhängigen Bildwiederholrate aufgenommen werden. Besonders vorteilhaft ist es, wenn im Schritt des Änderns die Bildwiederholrate derart geändert wird, dass die Einzelbilder der Bildsequenz um den Zeitdifferenzwert zueinander versetzt sind. Dadurch kann der Rechenaufwand zum Ermitteln des optischen Flusses möglichst gering gehalten werden.

Von Vorteil ist auch, wenn im Schritt des Detektierens ein Teilausschnitt der Einzelbilder durchsucht wird, um die übereinstimmenden Pixel zu detektieren. Unter einem Teilausschnitt kann ein Suchfenster verstanden werden, das einen lokal eingegrenzten Suchbereich um einen Ausgangspunkt herum beschreibt. Dadurch kann vermieden werden, dass die kompletten Einzelbilder nach einer Übereinstimmung der Pixel durchsucht werden. Somit kann zum einen der Ressourcenverbrauch reduziert werden und zum anderen eine eindeutige Detektion der Übereinstimmung gewährleistet werden. Des Weiteren kann dadurch geometrisches Vorwissen bezüglich einer Bewegung des Bildinhalts, der meist nach oben hin begrenzt ist, abhängig von der Bewegung der Objekte im Bild und der Eigenbewegung der Kamera mit einbezogen werden.

Es wird im Schritt des Bestimmens gemäß der Erfindung zumindest ein von dem Zeitdifferenzwert abweichender weiterer Zeitdifferenzwert unter Verwendung des Eingangssignals bestimmt. Im Schritt des Auswählens werden zumindest zwei um den weiteren Zeitdifferenzwert zueinander versetzte weitere Einzelbilder der Bildsequenz ausgewählt.

Dementsprechend werden im Schritt des Detektierens übereinstimmende weitere Pixel in den weiteren Einzelbildern detektiert, um den optischen Fluss unter Verwendung der übereinstimmenden weiteren Pixel zu ermitteln. Dadurch kann der optische Fluss in einem gegebenen Szenario in unterschiedlichen Flussfeldern mit je einer anderen Zeitbasis ermittelt werden.

Dabei werden im Schritt des Auswertens die Einzelbilder ausgewertet, um den optischen Fluss in einem ersten Bereich der Fahrzeugumgebung zu ermitteln, und die weiteren Einzelbilder verwendet werden, um den optischen Fluss in einem zweiten Bereich der Fahrzeugumgebung zu ermitteln. Dadurch kann der optische Fluss gleichzeitig in unterschiedlichen Bereichen der Fahrzeugumgebung mit je einer anderen, an den jeweiligen Bereich angepassten Zeitbasis ermittelt werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung des Fahrzeugs. Hierzu kann die Vorrichtung beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät des Fahrzeugs.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1 eine schematische Darstellung eines Fahrzeugs mit einer Vorrichtung gemäß einem Ausführungsbeispiel;

Fig. 2 eine schematische Darstellung einer Vorrichtung aus Fig. 1;

Fig. 3 ein Blockschaltbild zur Beschreibung eines Ablaufs eines Verfahrens gemäß einem Ausführungsbeispiel;

Fig. 4 ein Ablaufdiagramm eines Verfahrens gemäß einem Ausführungsbeispiel;

Fig. 5 eine schematische Darstellung eines optischen Flusses in zwei Einzelbildern, aufgenommen von einer Kamera aus Fig. 1;

Fig. 6 eine schematische Darstellung eines optischen Flusses in zwei Einzelbildern, aufgenommen von einer Kamera aus Fig. 1;

Fig. 7 eine schematische Darstellung eines optischen Flusses in zwei Einzelbildern, aufgenommen von einer Kamera aus Fig. 1;

Fig. 8 eine schematische Darstellung eines optischen Flusses in einem Einzelbild, aufgenommen von einer Kamera aus Fig. 1;

Fig. 9 eine schematische Darstellung eines optischen Flusses in einem Einzelbild, aufgenommen von einer Kamera aus Fig. 1; und

Fig. 10 eine schematische Darstellung eines optischen Flusses in zwei Einzelbildern, aufgenommen von einer Kamera aus Fig. 1.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

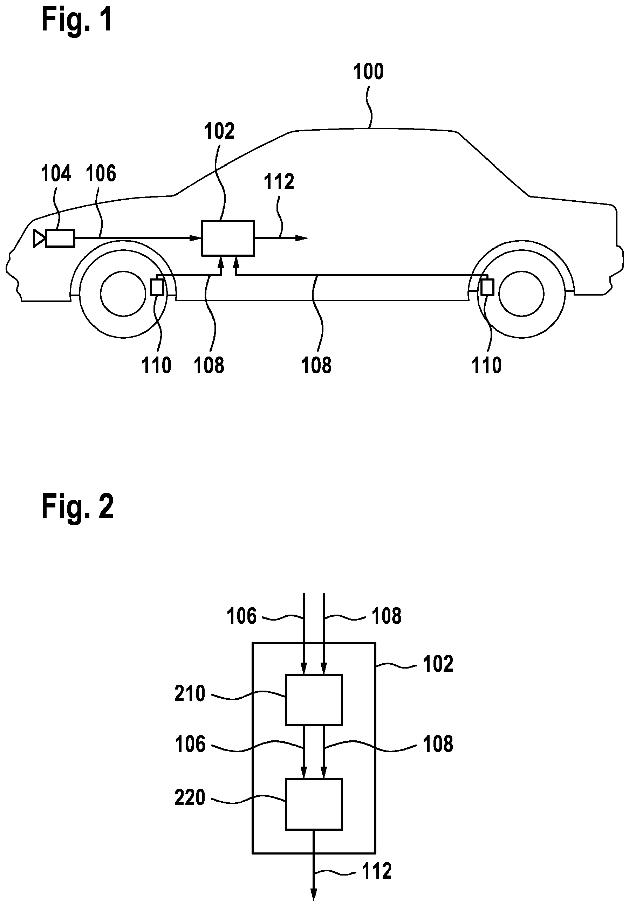

Fig. 1 zeigt eine schematische Darstellung eines Fahrzeugs 100 mit einer Vorrichtung 102 gemäß einem Ausführungsbeispiel. Die Vorrichtung 102 ist an eine Kamera 104 des Fahrzeugs 100 angeschlossen. Die Kamera 104 ist ausgebildet, um ein Bildsignal 106, das eine Bildsequenz aus einer Mehrzahl von Einzelbildern einer Fahrzeugumgebung des Fahrzeugs 100 repräsentiert, an die Vorrichtung 102 zu übertragen. Ferner empfängt die Vorrichtung 102 über eine geeignete Schnittstelle zumindest ein Eingangssignal 108, das in Fig. 1 lediglich beispielhaft von Raddrehzahlsensoren 110 des Fahrzeugs 100 bereitgestellt wird und somit eine Raddrehzahl bzw. eine Geschwindigkeit des Fahrzeugs 100 repräsentiert. Je nach Ausführungsbeispiel handelt es sich bei dem Eingangssignal 108 um unter Verwendung unterschiedlicher Sensoren des Fahrzeugs 100 bereitgestellte Signale zur Erkennung der Fahrzeugumgebung oder einer Fahrsituation des Fahrzeugs 100, wie dies nachfolgend näher beschrieben ist. Alternativ oder zusätzlich repräsentiert das Eingangssignal 108 auch zwischengespeicherte Daten aus einer vorherigen Auswertung von Bilddaten der Kamera 104. Die Vorrichtung 102 ist ausgebildet, um unter Verwendung des Eingangssignals 108 eine Zeitdifferenz zur Ermittlung eines optischen Flusses anhand der Bildsequenz zu bestimmen. Die Vorrichtung 102 wählt zumindest zwei Einzelbilder aus der Bildsequenz aus, deren zeitlicher Abstand gleich der vorangehend bestimmten Zeitdifferenz ist, und durchsucht diese auf übereinstimmende Pixel. Anhand der übereinstimmenden Pixel ermittelt die Vorrichtung 102 einen optischen Fluss der Bildsequenz und stellt diesen in Form entsprechender Flussdaten 112 bereit. Die Flussdaten 112 werden beispielsweise von einem Steuergerät des Fahrzeugs 100 zur Ansteuerung verschiedener Fahrerassistenzfunktionen ausgewertet.

Die Vorrichtung 102 ist ausgebildet, um eine Bildwiederholrate der Kamera 104 unter Verwendung der anhand des Eingangssignals 108 bestimmten Zeitdifferenz zu variieren, d. h., die zeitliche Bildwiederholrate ist variabel einstellbar. Insbesondere passt die Vorrichtung 102 die Bildwiederholrate dabei derart an, dass die Einzelbilder der durch das Bildsignal 106 repräsentierten Bildsequenz einen der Zeitdifferenz entsprechenden zeitlichen Abstand zueinander aufweisen. Zur Ermittlung des optischen Flusses ist es vorteilhaft, wenn eine gewisse Anzahl an Videobildern aus der Vergangenheit gespeichert wurde und der Zugriff auf jedes dieser Bilder unabhängig erfolgt.

Somit können unterschiedliche Situationen des Fahrzeugs 100 bei der Ermittlung des optischen Flusses durch dynamische Anpassung der Zeitdifferenz berücksichtigt werden.

Je größer der zeitliche Abstand wird, desto größer wird die Bewegung im Bild, desto schwieriger ist jedoch auch die Zuordnung von korrespondierenden Bildpunkten. Bei großem Zeitabstand können beispielsweise im Stillstand des Fahrzeugs 100 langsam bewegte Objekte, beispielsweise Fußgänger, erkannt werden. In einem Szenario, in dem sich das Fahrzeug 100 auf einer mehrspurigen Fahrbahn zusammen mit anderen Fahrzeugen in die gleiche Richtung bewegt, wie etwa auf einer Autobahn, können die anderen Fahrzeuge vom optischen Fluss erfasst werden, während die Bewegung des Hintergrunds nicht mehr erkennbar sein kann. Zusätzlich vergrößert sich in der Regel bei größerem Zeitabstand die Größe des Flussvektors und somit dessen Signal-Rausch-Verhältnis (SNR), was beispielsweise bei der Eigenbewegungsschätzung von Vorteil ist.

Je kleiner der zeitliche Abstand ist, desto höher ist die Wahrscheinlichkeit, dass Objekte mit großer Eigengeschwindigkeit erfasst werden. Dies gilt auch für den Fall, dass sich die Position der Kamera 104 mit hoher Geschwindigkeit ändert, etwa durch Translation oder Rotation. In Fahrszenarien mit hoher Dynamik wie einer starken Bremsung, einer engen Kurvenfahrt oder einer Fahrt auf unebenem Untergrund wählt die Vorrichtung 102 vorteilhafterweise einen geringeren zeitlichen Abstand. So kann ein Verlust des optischen Flusses verhindert werden. Verschiedene Kriterien für die Wahl einer oder mehrerer unterschiedlicher Zeitdifferenzen für die Ermittlung des optischen Flusses bzw. Vorschriften zur Ableitung der Zeitdifferenz werden nachfolgend näher beschrieben.

Fig. 2 zeigt eine schematische Darstellung einer Vorrichtung 102 aus Fig. 1. Die Vorrichtung 102 umfasst eine Empfangseinheit 210 zum Empfangen des Eingangssignals 108 oder auch einer Menge unterschiedlicher Eingangssignale 108 sowie des Bildsignals 106. In einer Auswerteeinheit 220 erfolgt die Auswertung des Eingangssignals 108 zur Bestimmung eines die Zeitdifferenz repräsentierenden Zeitdifferenzwertes sowie die Auswertung des Bildsignals 106 zur Auswahl von zumindest zwei um den Zeitdifferenzwert zueinander versetzten Einzelbildern der durch das Bildsignal 106 repräsentierten Bildsequenz. Ferner ist die Auswerteeinheit 220 ausgebildet, um die um den Zeitdifferenzwert zueinander versetzten Einzelbilder nach übereinstimmenden Pixeln zu durchsuchen und anhand dieser Pixel den optischen Fluss der Bildsequenz zu ermitteln. Hierbei werden beispielsweise lediglich relevante Teilausschnitte der Einzelbilder nach übereinstimmenden Pixeln untersucht, um den Rechenaufwand möglichst gering zu halten. Als Ergebnis dieser Auswertung gibt die Auswerteeinheit 220 die Flussdaten 112 zur weiteren Verarbeitung aus.

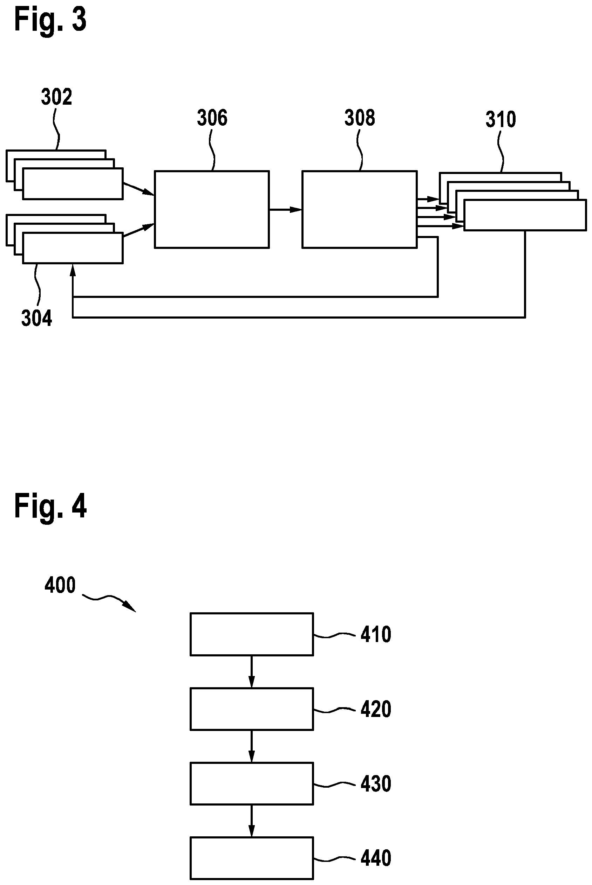

Fig. 3 zeigt ein Blockschaltbild zur Beschreibung eines Ablaufs eines Verfahrens gemäß einem Ausführungsbeispiel. Der in Fig. 3 dargestellte Ablauf entspricht beispielsweise dem Ablauf eines durch eine vorangehend anhand der Figuren 1 und 2 beschriebene Vorrichtung ausgeführten Verfahrens.

Dargestellt sind ein Block 302, der unabhängige Eingangssignale repräsentiert, sowie ein Block 304, der abhängige Eingangssignale repräsentiert. Die abhängigen und unabhängigen Eingangssignale werden in einem Block 306 ausgewertet und zur Bestimmung optimaler Zeitdifferenzen $\Delta t_{1...n}$ verwendet. In einem weiteren Block 308 erfolgt die Berechnung der optischen Flüsse zwischen Bild $I_t$ und Bild $I_{t-\Delta t}$. Dabei kennzeichnet "t" üblicherweise das aktuelle Bild und t-$\Delta t$ ein vorheriges Bild. Das Ergebnis der Berechnung wird beispielsweise in einem Block 310 von verschiedenen Messprogrammen oder Funktionen des Fahrzeugs weiterverarbeitet. Die Ergebnisse der Messprogramme sowie eine Statistik des optischen Flusses können wiederum als Eingangssignale verwendet werden. Dabei werden die Ergebnisse der Messprogramme über indirekte Rückkopplung in den Block 306 ein, während die Ergebnisse der im Block 308 durchgeführten Berechnung, beispielsweise in Form von Statistiken, über direkte Rückkopplung in den Block 306 eingehen. Die direkte bzw. indirekte Rückkopplung ist durch eine gestrichelte Linie gekennzeichnet.

Unabhängige Eingangssignale repräsentieren beispielsweise folgende Informationen:

- Detektion von Fußgängern, Radfahrern, Fahrzeugen oder sonstigen Objekten, beispielsweise mittels Klassifikation;
- (Stereo-)Tiefeninformationen;
- Eigenbewegung des Fahrzeugs, ermittelt durch externe Bewegungssensoren wie beispielsweise Beschleunigungs-, Lenkraddreh- oder Raddrehsensoren;
- Eigenbewegung des Fahrzeugs, ermittelt durch Bildinformationen, beispielsweise durch Bildkorrelation, jedoch nicht anhand des optischen Flusses;
- Eigenbewegung des Fahrzeugs, ermittelt durch externe Sensoren wie Radar-, Lidar-, Ultraschall-, GPS-, Licht- oder Regensensoren;
- Bildbasierte Spurerkennung;
- Verfügbare Genauigkeit von Kalibrierungsergebnissen, beispielsweise intrinsische Parameter der Kamera wie Brennweite oder Bildmittelpunkt, extrinsische Parameter mit Bezug zu Weltkoordinaten, relative extrinsische Parameter (relativer Bezug zweier Kameras) oder Region-of-Interest;
- Belichtungssteuerung;
- Blindheitserkennung;
- Verkehrsschilderkennung (bei Erkennung eines Tempolimits wird das Fahrzeug automatisch abgebremst).

Abhängige Eingangssignale repräsentieren beispielsweise folgende Informationen:

- Statistik aus vorheriger Berechnung des optischen Flusses;
- Flussbasierte Eigenbewegungsschätzung;
- Flussbasierte Objektdetektion;
- Flussbasierte Oberflächenschätzung.

Fusionierte Eingangssignale sind beispielsweise:

- AEB-Signale einer automatischen Notbremsfunktion für kritische, nachklassifizierte Stereoobjekte, basierend auf Disparität und optischem Fluss;

- Prefill-Signale zur Vorbereitung der Bremse für eine schnellere Auslösung der Notbremsung.

Ein derartiges Verfahren ermöglicht es, situationsabhängig eine oder mehrere optimale Zeitdifferenzen zur Berechnung des optischen Flusses zu bestimmen. Die optimale Zeitdifferenz ist hierbei definiert als längste mögliche Zeit, in der die Verfügbarkeit des optischen Flusses gewährleistet ist, unter Berücksichtigung der Anforderungen nachfolgender Messprogramme. So ist beispielsweise in Hochdynamiksituationen die optimale Zeitdifferenz kurz, um hochfrequente Änderungen des Bildinhalts einfangen zu können. Bei stetiger, langsamer Geradeausfahrt ist hingegen eine längere Zeitdifferenz besser geeignet, um eine genauere Eigenbewegungsschätzung durchzuführen.

Bei eingeschränkten Ressourcen sollten nicht alle möglichen optischen Flüsse berechnet werden, sondern lediglich diejenigen, die aufgrund der Eingangssignale als besonders vielversprechend eingeschätzt werden. Auf diese Weise können Rechenzeit und Hardwareressourcen reduziert werden. Im Ergebnis bleibt mehr Zeit für andere Berechnungen, die Wärmeentwicklung ist geringer und es kann günstigere Hardware genutzt werden.

Die Menge der benötigten Zeitdifferenzen $\Delta t_{1\ldots i}$ kann wie folgt bestimmt werden:

$$\Delta t_{1\ldots i} = \text{unique}\left( t \circ \text{range}\big((Wa)I, T_l, T_u\big) \right)$$

Dabei sind die enthaltenen Elemente und Operatoren wie im Folgenden beschrieben definiert:

a      Vektor der Eingangswerte mit k Elementen

W      $j \times k$ Gewichtungsmatrix zur Gewichtung der Eingangswerte, wobei j die Anzahl der gewünschten Bedingungen ist

I      Vektor mit k Einsen zur zeilenweisen Summation von Wa

t      Vektor mit j Werten, die der jeweiligen Zeile eine definierte Zeitdifferenz zur Flussberechnung zuweist

$\text{thresh}(\alpha, T_l, T_u)$      Wendet die Schwellwertvektoren $T_l$ und $T_u$ elementweise auf $\alpha$ an und gibt einen binären Vektor zurück, bei dem ein Element 1 ist, wenn $T_{l,i} < \alpha_i < T_{u,i}$ und 0 andernfalls

o      Hadamard-Produkt (elementweise Multiplikation)

$\text{unique}(\gamma)$      Gibt alle einzigartigen Elemente in einem Vektor $\gamma$ zurück, die ungleich Null sind

Der optische Fluss wird für kontinuierliche Eingangssignale beispielsweise folgendermaßen berechnet.

Wenn die Geschwindigkeit beispielsweise größer als 90 km/h ist, soll ein Fluss mit $\Delta t = 33$ ms berechnet werden, andernfalls mit $\Delta t = 66$ ms. Existiert aber mindestens ein erkanntes Fahrzeug im Bild, soll zusätzlich ein Fluss mit $\Delta t = 200$ ms berechnet werden, jedoch nur, wenn die Nickrate betragsmäßig kleiner als 1,5°/s ist. Daraus folgt:

$$a = \begin{bmatrix} a_1 \\ a_2 \\ a_3 \end{bmatrix}$$

mit

$a_1 = [0,250]$ (Geschwindigkeit)
$a_2 \in \{0,1\}$ (Binarisierter Wert: Es wurden Fahrzeuge erkannt: ja/nein)
$a_3 = [-\infty,\infty]$ (Nickrate, theoretisch nach oben und unten unbegrenzt)

Die Gewichtungsmatrix soll zwei Bedingungen für die Geschwindigkeit zweimal auswerten (für die Fälle größer und kleiner 90 km/h, die ersten beiden Zeilen der Gewichtungsmatrix), somit wird sie wie folgt gewählt. Die dritte Zeile besagt, dass das Vorhandensein von Objekten und die Nickrate in die dritte Bedingung einfließen sollen:

$$W = \begin{bmatrix} 1 & 0 & 0 \\ 1 & 0 & 0 \\ 0 & 1 & 1 \end{bmatrix}$$

Die Schwellwerte werden wie folgt gewählt:

$$T_l = \begin{bmatrix} 0 \\ 90 \\ 1 - 1{,}5 \end{bmatrix} = \begin{bmatrix} 0 \\ 90 \\ -0{,}5 \end{bmatrix}$$

$$T_u = \begin{bmatrix} 90 \\ \infty \\ 1 + 1{,}5 \end{bmatrix} = \begin{bmatrix} 90 \\ \infty \\ 2{,}5 \end{bmatrix}$$

Gegeben sei beispielsweise eine Geschwindigkeit von $\alpha_1$ = 115 km/h. Es wurden weitere Fahrzeuge erkannt, somit ist $\alpha_2$ = 1. Die aktuelle Nickrate betrage $\alpha_3$ = -0,7 °/s.

$$Wa = \begin{bmatrix} 1 & 0 & 0 \\ 1 & 0 & 0 \\ 0 & 1 & 1 \end{bmatrix} \begin{bmatrix} 115 \\ 1 \\ -0{,}7 \end{bmatrix} = \begin{bmatrix} 115 \\ 115 \\ 0{,}3 \end{bmatrix}$$

Wendet man nun die Schwellwertfunktion range((Wa)I, $T_l$, $T_u$) an, so ergibt sich:

$$\text{range}\big((Wa)I, T_l, T_u\big) = \begin{bmatrix} T_{l,1} \le 115 < T_{u,1} \\ T_{l,2} \le 115 < T_{u,2} \\ T_{l,3} \le 0{,}3 < T_{u,3} \end{bmatrix} = \begin{bmatrix} 0 \le 115 < 90 \\ 90 \le 115 < \infty \\ -0{,}5 \le 0{,}3 < 2{,}5 \end{bmatrix} = \begin{bmatrix} 0 \\ 1 \\ 1 \end{bmatrix}$$

Der Ausdruck range((Wa)I, $T_i$, $T_u$) liefert nun also einen Vektor mit Nullen und Einsen, der besagt, ob die Bedingung der jeweiligen Spalte von W erfüllt ist oder nicht. In diesem Beispiel ist die Bedingung, dass die Geschwindigkeit zwischen 0 und 90 km/h liegt, nicht erfüllt. Die Bedingung, dass sie größer als 90 km/h ist, ist wahr und das Vorhandensein von Fahrzeugen bei gleichzeitig geringer Nickrate ist ebenfalls wahr.

Durch die elementweise Multiplikation mit t werden nun diejenigen Vektoreinträge mit Einsen mit der jeweiligen Zeitdifferenz zugeordnet:

$$t \circ \begin{bmatrix} 0 \\ 1 \\ 1 \end{bmatrix} = \begin{bmatrix} 33\text{ms} \\ 66\text{ms} \\ 200\text{ms} \end{bmatrix} \circ \begin{bmatrix} 0 \\ 1 \\ 1 \end{bmatrix} = \begin{bmatrix} 0 \\ 66\text{ms} \\ 200\text{ms} \end{bmatrix}$$

Im letzten Schritt werden nun doppelte Einträge und Nullen im Vektor entfernt und eine Menge von Zeiten zurückgegeben:

$$\Delta t_{1 \dots i} = \text{unique}\left(\begin{bmatrix} 0 \\ 66\text{ms} \\ 200\text{ms} \end{bmatrix}\right) = \{66\text{ms}, 200\text{ms}\}$$

Rechenbeispiel für binäre Eingangssignale

Werden binäre Eingangssignale verwendet, ergeben sich einige Vereinfachungen. Die unteren Schwellwerte reduzieren sich beispielsweise auf die Zahl der mindestens benötigten Signale.

Ziel: Bei einer automatischen oder einer manuellen Bremsung soll $\Delta t$ = 33 ms sein, andernfalls soll $\Delta t$ = 66 ms sein. Daraus folgt:

$$a = \begin{bmatrix} a_1 \\ a_2 \end{bmatrix}$$

mit

$a_1 \in \{0,1\}$ (automatische Bremsung ja/nein) und

$a_2 \in \{0,1\}$ (manuelle Bremsung ja/nein)

Die Gewichtungsmatrix soll nur zwei Bedingungen enthalten:

1. Ist die Summe der Nicht-Null-Elemente größer oder gleich 1?

2. Ist die Summe der Nicht-Null-Elemente kleiner 1?

$$W = \begin{bmatrix} 1 & 1 \\ 1 & 1 \end{bmatrix}$$

Im Fall, dass beispielsweise eine automatische Notbremsung ausgeführt wird und der Fahrer nicht manuell bremst, ergibt das Produkt aus der Gewichtungsmatrix und den Eingangssignalen das folgende Ergebnis:

$$Wa = \begin{bmatrix} 1 & 1 \\ 1 & 1 \end{bmatrix}\begin{bmatrix} a_1 \\ a_2 \end{bmatrix} = \begin{bmatrix} 1 & 1 \\ 1 & 1 \end{bmatrix}\begin{bmatrix} 1 \\ 0 \end{bmatrix} = \begin{bmatrix} 1 \\ 1 \end{bmatrix}$$

Die Schwellwerte werden wie folgt gewählt, sodass mindestens eine der Bedingungen wahr sein muss (der Schwellwert liegt bei 0,5). Zusätzlich ist die obere Schwelle unendlich, sodass es keine maximale Anzahl von wahren Bedingungen gibt.

$$T_l = \begin{bmatrix} 0,5 \\ 0 \end{bmatrix}$$

$$T_u = \begin{bmatrix} \infty \\ 0,5 \end{bmatrix}$$

Die Auswertung der Schwellwerte liefert das folgende Ergebnis:

$$\text{range}\big((Wa)I, T_l, T_u\big) = \begin{bmatrix} T_{l,1} \leq 1 < T_{u,1} \\ T_{l,2} \leq 1 < T_{u,2} \end{bmatrix} = \begin{bmatrix} 0,5 \leq 1 < \infty \\ 0 \leq 1 < 0,5 \end{bmatrix} = \begin{bmatrix} 1 \\ 0 \end{bmatrix}$$

Bei der elementweisen Multiplikation mit dem Zeitdifferenzenvektor ergibt sich nur ein von Null verschiedener Wert:

$$t \circ \begin{bmatrix} 1 \\ 0 \end{bmatrix} = \begin{bmatrix} 33\text{ms} \\ 66\text{ms} \end{bmatrix} \circ \begin{bmatrix} 1 \\ 0 \end{bmatrix} = \begin{bmatrix} 33\text{ms} \\ 0 \end{bmatrix}$$

Im letzten Schritt werden nun doppelte Einträge im Vektor entfernt und eine Menge von Zeiten zurückgegeben:

$$\Delta t_{1\ldots i} = \text{unique}\left(\begin{bmatrix} 33\text{ms} \\ 0 \end{bmatrix}\right) = \{33\text{ms}\}$$

Alternativ zur mathematischen Notation ist auch eine logische Notation denkbar. Der Kerngedanke besteht darin, die Eingangsgrößen durch logische Operationen zu verknüpfen. Handelt es sich um nichtbinäre Eingangsgrößen, sollte zusätzlich ein unterer und oberer Schwellwert definiert werden und das Ergebnis der Schwellwerte dann mit logischen Operationen verknüpft werden.

Ziel ist es, die Zeitdifferenz des optischen Flusses an die Fahrbahngegebenheiten und die Statistik des letzten optischen Flusses anzupassen.

Gegeben sei ein kontinuierliches Signal für Fahrbahnebenheit (0 sehr glatte Fahrbahn, 1 sehr unebene Fahr-

bahn)

$$a_1 = [0, 1]$$

sowie ein die Anzahl der Flussvektoren, die die maximale Länge von 31 Pixeln erreicht haben (Maß dafür, dass die Zeitdifferenz zu lang ist).

$$a_2 = [0, M]$$

Zunächst werden die kontinuierlichen Eingangsgrößen in binäre Werte überführt:

$$a^* = \begin{bmatrix} \mathrm{range}(a_1, T_{l,1}, T_{u,1}) \\ \mathrm{range}(a_2, T_{l,2}, T_{u,2}) \end{bmatrix}$$

Mit den Beispielwerten
$a_1 = 0{,}3$ und $a_2 = 634$

$$T_l = \begin{bmatrix} 0{,}4 \\ 250 \end{bmatrix} \text{ und } T_u = \begin{bmatrix} 1{,}0 \\ \infty \end{bmatrix}$$

$$t = \begin{bmatrix} 33ms \\ 66ms \end{bmatrix} \circ \begin{bmatrix} 1 \\ 0 \end{bmatrix}$$

ergibt sich der folgende Vektor mit Binärwerten:

$$a^* = \begin{bmatrix} T_{l,1} \le a_1 < T_{u,1} \\ T_{l,2} \le a_2 < T_{u,2} \end{bmatrix} = \begin{bmatrix} 0{,}4 \le 0{,}3 < 1{,}0 \\ 250 \le 634 < \infty \end{bmatrix} = \begin{bmatrix} 0 \\ 1 \end{bmatrix}$$

Eine denkbare logische Notation, bei der die beiden Eingangsgrößen im ersten Fall verundet (&) und im zweiten Fall verodert (|) werden, während im dritten Fall das Fehlschlagen beider Bedingungen abgefangen wird, sieht beispielsweise folgendermaßen aus:

$$\Delta t_1 = t_1 \, (a_1^* \, \& \, a_2^*)$$

$$\Delta t_2 = t_2 \, (a_1^* \mid a_2^*)$$

$$\Delta t_3 = t_3 \, (\overline{a_1^*} \, \& \, \overline{a_2^*})$$

Im konkreten Fall ergeben sich somit die Werte

$$\Delta t_1 = 33ms \, (0 \, \& \, 1) = 0$$

$$\Delta t_2 = 66ms \, (0 \mid 1) = 1$$

$$\Delta t_3 = 100ms \, (1 \, \& \, 0) = 0$$

und

$$\Delta t = \{66ms\}$$

Fig. 4 zeigt ein Ablaufdiagramm eines Verfahrens 400 gemäß einem Ausführungsbeispiel. Das Verfahren 400 zum Ermitteln eines optischen Flusses kann beispielsweise von einer vorangehend anhand der Figuren 1 bis 3 beschriebenen Vorrichtung ausgeführt werden. Dabei werden in einem Schritt 410 das Eingangssignal und das Bildsignal empfangen. In einem Schritt 420 wird der Zeitdifferenzwert unter Verwendung des Eingangssignals bestimmt. In einem weiteren Schritt 430 werden zumindest zwei um den Zeitdifferenzwert zueinander versetzte Einzelbilder der Bildsequenz unter Verwendung des Bildsignals ausgewählt. In einem Schritt 440 werden übereinstimmende Pixel in den Einzelbildern detektiert und zur Ermittlung des optischen Flusses verwendet.

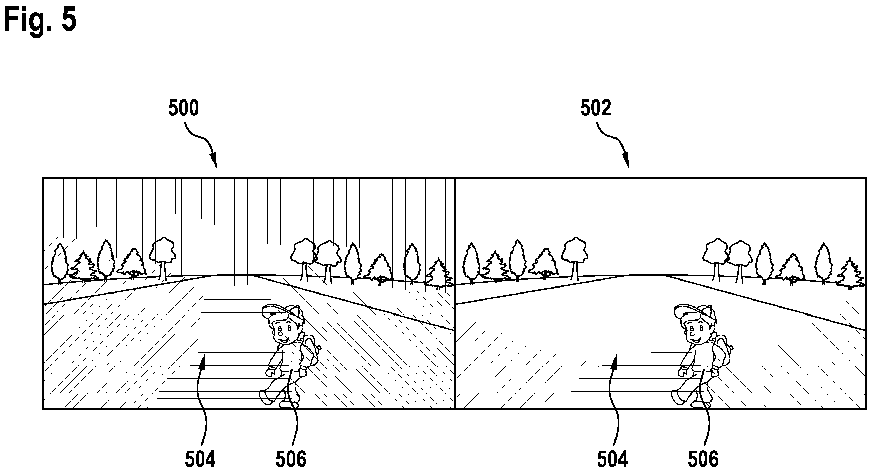

Fig. 5 zeigt eine schematische Darstellung eines optischen Flusses in zwei Einzelbildern 500, 502, aufgenommen von einer Kamera aus Fig. 1. Die Einzelbilder 500, 502 zeigen je ein eine Fahrbahn 504 querendes Kind 506. Zum besseren Vergleich sind die Einzelbilder 500, 502 nebeneinander dargestellt, wobei das linke Einzelbild 500 den optischen Fluss bei einer Zeitdifferenz von $\Delta t = 66$ ms (t-4 auf t-3) zeigt und das rechte Einzelbild 502 den optischen Fluss bei einer Zeitdifferenz von $\Delta t = 33$ ms (t-3 auf t-2) zeigt. Beide Flussfelder sind brauchbar. Die Anzahl der Flussvektoren ist in etwa gleich. Die Länge der Flussvektoren im Einzelbild 500 ist etwa halb so groß wie im Einzelbild 502.

Der optische Fluss ist schematisch durch schraffierte Bereiche in den Einzelbildern 500, 502 angedeutet.

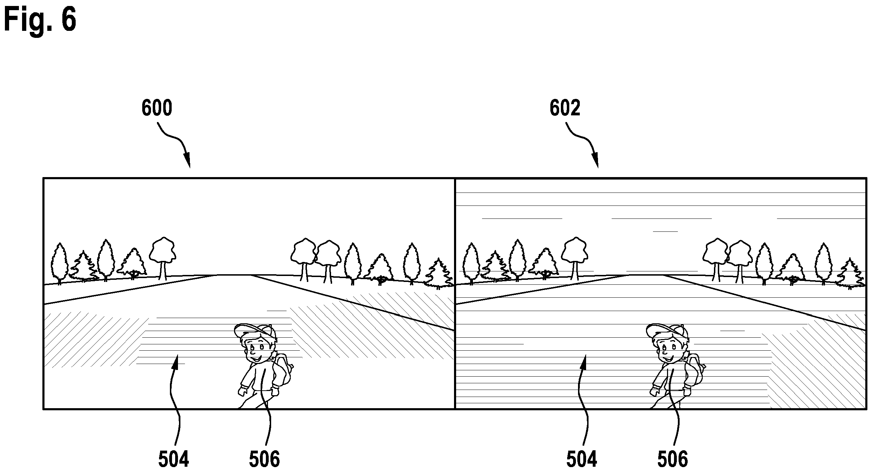

Fig. 6 zeigt eine schematische Darstellung eines optischen Flusses in zwei Einzelbildern 600, 602, aufgenommen von einer Kamera aus Fig. 1. Gezeigt ist der optische Fluss einen Zeitschritt später als in Fig. 5. Das linke Einzelbild 600 zeigt den optischen Fluss bei $\Delta t = 66$ ms (t-2 auf t). Im rechten Einzelbild 602 ist der optische Fluss bei $\Delta t = 33$ ms (t-1 auf t) dargestellt. Wie aus Fig. 6 ersichtlich, geht der optische Fluss auf dem Objekt bei einer zu großen Zeitdifferenz verloren. Ein rechtzeitiges Umschalten auf die kürzere Zeitdifferenz bringt ein deutlich besseres Verhalten.

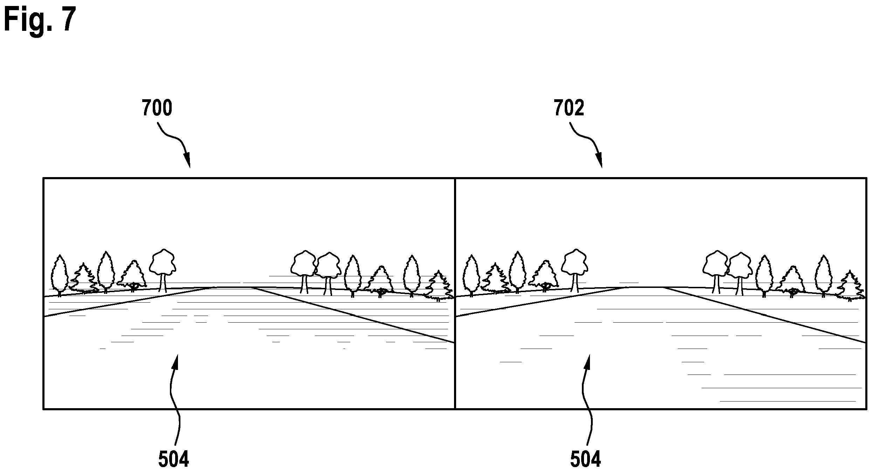

Fig. 7 zeigt eine schematische Darstellung eines optischen Flusses in zwei Einzelbildern 700, 702, aufgenommen von einer Kamera aus Fig. 1. Gezeigt sind Aufnahmen der Fahrbahn 504 bei hoher Nickrate des Fahrzeugs. Im Flussfeld des linken Einzelbildes 700 ($\Delta t = 66$ ms) fehlt der untere Teil des Bildes aufgrund zu großer Flussvektoren, die außerhalb des Suchbereichs liegen. Das Flussfeld des rechten Einzelbildes 702 ($\Delta t = 33$ ms) ist vollständig vorhanden. Der spärlichere optische Eindruck in der Visualisierung erklärt sich durch die kürzeren Flussvektoren.

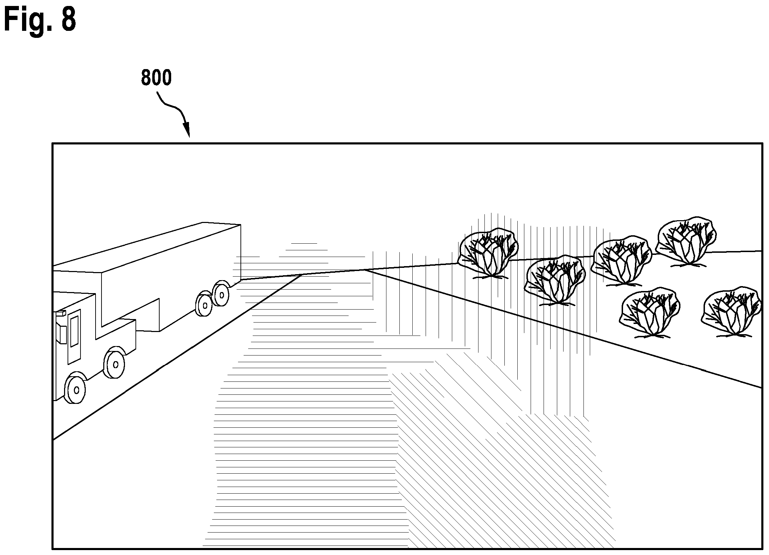

Fig. 8 zeigt eine schematische Darstellung eines optischen Flusses in einem Einzelbild 800, aufgenommen von einer Kamera aus Fig. 1. Der optische Fluss konzentriert sich in dem in Fig. 8 gezeigten Einzelbild 800 auf eine Bildmitte. An den zeitlichen Randbereichen des Einzelbildes 800 fehlt der optische Fluss aufgrund einer starken Rollbewegung des Fahrzeugs.

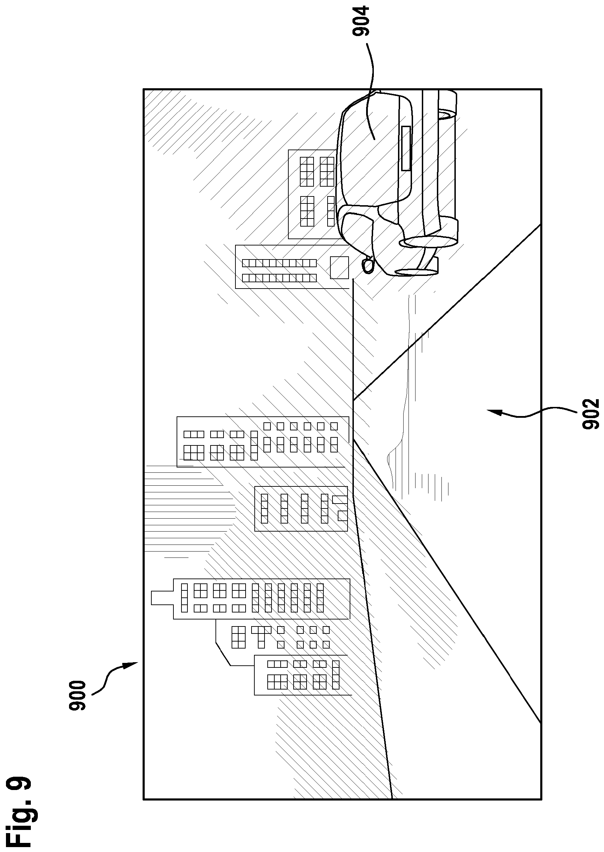

Fig. 9 zeigt eine schematische Darstellung eines optischen Flusses in einem Einzelbild 900, aufgenommen von einer Kamera aus Fig. 1. Das Einzelbild 900 zeigt eine Straße 902 mit einem dem Fahrzeug vorausfahrenden Fahrzeug 904. Die Flussvektoren auf der Straße 902 sind groß, während die Flussvektoren auf dem vorausfahrenden Fahrzeug 904 kurz sind. Ein dem vorausfahrenden Fahrzeug 904 zugeordnetes weiteres Flussfeld mit größerer Zeitdifferenz führt hier erfindungsgemäß zu einer genaueren Berechnung der Relativgeschwindigkeit zwischen den beiden Fahrzeugen.

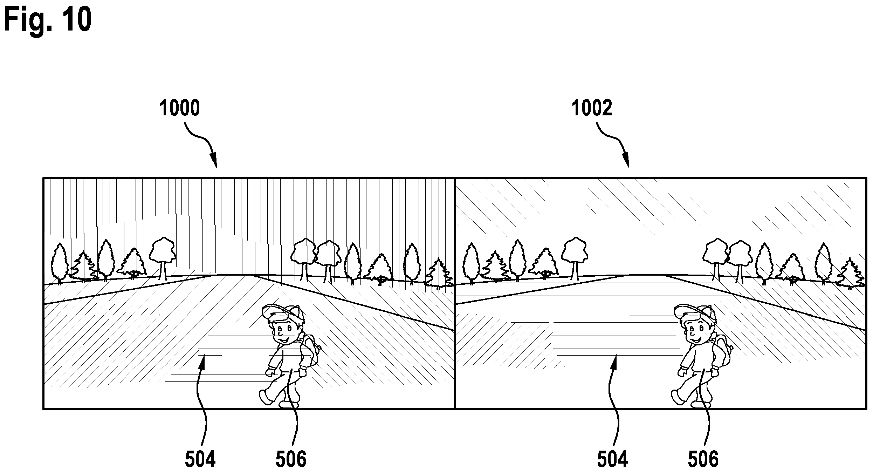

Fig. 10 zeigt eine schematische Darstellung eines optischen Flusses in zwei Einzelbildern 1000, 1002, aufgenommen von einer Kamera aus Fig. 1. Wie aus Fig. 10 ersichtlich, geht der optische Fluss in einem bestimmten Bildbereich verloren, sodass von einer zu hohen Eigenbewegung des Fahrzeugs auszugehen ist.

Beispielsweise ist aus dem linken Bild 1000 ein Flussfeld bekannt, das während einer Notbremsung auf einen Kinderdummy entstanden ist. Im Vergleich zu dieser vorherigen Berechnung des Flussfelds fehlt im nächsten Bild 1002 an der Stelle in der Mitte des Bildes, an der sich der Kinderdummy befindet, jegliches Flussergebnis. Dabei handelt es sich nicht um Flussvektoren der Länge null, sondern um eine nichtvorhandene Detektion von Flussmessungen. Daher kann darauf geschlossen werden, dass die Relativbewegung des Objekts zu groß für den Suchbereich des optischen Flusses war. In diesem Fall erfolgt gemäß einem Ausführungsbeispiel der hier beschriebenen Erfindung eine Aufteilung in zwei Flussfelder mit unterschiedlichen Zeitdifferenzen.

Nachfolgend werden verschiedene Anwendungsfälle des hier vorgestellten Ansatzes beschrieben.

Beispielsweise kann der optische Fluss während einer Notbremsung auf einen Kinderdummy unter gewissen Umständen im Nahbereich verloren gehen. Dies hat zwei Gründe.

Erstens wandert der Kinderdummy durch die Annäherung des Egofahrzeugs an den relativ kleinen Kinderdummy im Bild immer weiter nach unten. Die resultierenden Flussvektoren zeigen somit immer stärker nach unten.

Dazu kommt die Nickbewegung des Fahrzeugs nach Auslösung der Notbremsung, die den gesamten Bildinhalt in vertikaler Richtung verschiebt. Nach einem initialen Einnicken kommt es zu einer Gegenbewegung nach oben, die die Flussvektoren auf dem Dummy noch länger werden lässt, bis diese nicht mehr in den aus technischen Gründen stark begrenzten Suchbereich passen, wodurch die Flussdetektion auf dem Kinderdummy fehlschlägt. Durch die Halbierung der Zeitdifferenz zwischen den Bildern, beispielsweise von 66 auf 33 ms, kann das Flussergebnis erheblich verbessert werden. Generell ist es jedoch nicht wünschenswert, alle Messung auf einer 33-ms-Basis durchzuführen. Daher wird beispielsweise nur im Fall einer automatischen Notbremsung anhand eines entsprechenden Notbremssignals eine solche Umschaltung der Zeitbasis durchgeführt. Das Notbremssignal basiert dabei auf einer Situationsanalyse von Objekten, die durch eine Auswertung von Disparität und Fluss erkannt wurden und mit einem Klassifikator bestätigt wurden, etwa durch eine bildbasierte Nachklassifikation als bremsrelevantes Objekt wie Auto, LKW, Fußgänger oder Radfahrer.

Die bildbasierte Nickrate des Fahrzeugs wird beispielsweise unabhängig vom optischen Fluss berechnet. Ist diese sehr groß, wird die Zeitbasis verringert, sodass die hohe Dynamik der Bewegung kompensiert wird.

Insbesondere bei hohen Fahrzeugen wie Lastkraftwagen kann es auf unebener Fahrbahn, etwa durch Schlaglöcher, zu hohen Rollraten kommen. Dies führt dazu, dass das Flussfeld an den Rändern des Bildes zusammenbricht, da der optische Fluss den Suchbereich verlässt. In der Mitte des Bildes wird jedoch noch Fluss gefunden, aus dem auch die Rollrate geschätzt werden kann. In einem solchen Fall wird beispielsweise anhand der Rollrate und der bekannten Größe des Suchbereichs die größte sinnvolle Zeitdifferenz für die Berechnung des optischen Flusses ermittelt.

Liefern die Fahrzeugsensoren und die unabhängig vom optischen Fluss bestimmte Rotation der Kamera kleine Ergebnisse und ist die Geschwindigkeit des Fahrzeugs gleichzeitig gering, kann auf eine ruhige Fahrt geschlossen werden. In diesem Fall wird die Zeitbasis beispielsweise verlängert, um die Genauigkeit der flussbasierten Eigenbewegungsschätzung zu erhöhen. Während einer Autobahnfahrt ist eine hohe Geschwindigkeit auf Basis der Raddrehzahlsensoren bekannt. Gleichzeitig werden durch Klassifikatoren unabhängig vom optischen Fluss weitere Fahrzeuge vor und neben dem Egofahrzeug erkannt. In diesem Fall wird eine kurze Zeitdifferenz $\Delta t_1$ zur Berechnung des optischen Flusses auf der Fahrbahn für die Eigenbewegungs- und Oberflächenschätzung bestimmt. Zusätzlich lässt sich eine zweite, längere Zeitdifferenz $\Delta t_2$ ableiten, mit deren Hilfe die relative Geschwindigkeit zwischen Egofahrzeug und vorausfahrenden Fahrzeugen sehr genau flussbasiert geschätzt wird.

Bei eingelegtem Rückwärtsgang kann von einem Parkmanöver ausgegangen werden. Als Zeitbasis des optischen Flusses wird hier beispielsweise ein mittlerer Wert gesetzt, was gleichzeitig eine adäquate Genauigkeit der Eigenbewegungsschätzung und hinreichend kurze Latenzen bis zum Eintreffen der Flussergebnisse gewährleistet.

Wenn die bildbasierte, vom optischen Fluss abhängige Oberflächenschätzung eine unebene Fahrbahn prädiziert, wird die Zeitdifferenz beispielsweise kurz gewählt, um die hohe Dynamik abzufangen. Ist jedoch gleichzeitig eine adaptive Ansteuerung des Fahrwerks zur Kompensation unebener Oberflächen aktiv, auch Magic Carpet genannt, wird die Zeitdifferenz wiederum entsprechend verlängert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Ermitteln eines optischen Flusses anhand einer von einer Kamera (104) eines Fahrzeugs (100) aufgenommenen Bildsequenz, wobei das Verfahren (400) folgende Schritte umfasst:

    Empfangen (410) zumindest eines Eingangssignals (108), das eine unter Verwendung zumindest eines Sensors (110) des Fahrzeugs (100) erkannte Fahrzeugumgebung und/oder Fahrsituation des Fahrzeugs (100) und/oder ein Ergebnis einer vorherigen Ermittlung des optischen Flusses repräsentiert, und eines die Bildsequenz repräsentierenden Bildsignals (106);
    Bestimmen (420) eines Zeitdifferenzwertes ($\Delta t$) unter Verwendung des Eingangssignals (108);
    Auswählen (430) von zumindest zwei um den Zeitdifferenzwert ($\Delta t$) zueinander versetzten Einzelbildern (502; 602; 702; 900) der Bildsequenz unter Verwendung des Bildsignals (106); und
    Detektieren (440) übereinstimmender Pixel in den Einzelbildern (502; 602; 702; 900), um den optischen Fluss unter Verwendung der übereinstimmenden Pixel zu ermitteln,
    wobei im Schritt des Bestimmens (420) zumindest ein von dem Zeitdifferenzwert ($\Delta t$) abweichender weiterer Zeitdifferenzwert unter Verwendung des Eingangssignals (108) bestimmt wird, **dadurch gekennzeichnet, dass** der weiterer Zeitdifferenzwert eine längere Zeitdifferenz als der Zeitdifferenzwert ($\Delta t$) repräsentiert, wobei im Schritt des Auswählens (430) zumindest zwei um den weiteren Zeitdifferenzwert zueinander versetzte weitere Einzelbilder der Bildsequenz ausgewählt werden, wobei im Schritt des Detektierens (440) übereinstimmende weitere Pixel in den weiteren Einzelbildern detektiert werden, um den optischen Fluss unter Verwendung der übereinstimmenden weiteren Pixel zu ermitteln, wobei in einem Schritt des Auswertens die Einzelbilder (502; 602; 702; 900) ausgewertet werden, um den optischen Fluss für eine Eigenbewegungs- und Oberflächenschätzung in einem ersten Bereich (902) der Fahrzeugumgebung zu ermitteln, und die weiteren Einzelbilder verwendet werden, um den optischen Fluss für eine Schätzung der relativen Geschwindigkeit zwischen dem Fahrzeug und vorausfahrenden Fahrzeugen in einem zweiten Bereich (904) der Fahrzeugumgebung zu ermitteln.

2. Verfahren (400) gemäß Anspruch 1, bei dem im Schritt des Bestimmens (420) der Zeitdifferenzwert (∆t) durch Verringern eines Ausgangswertes bestimmt wird, wenn das Eingangssignal (108) eine erkannte automatische Notbremsung des Fahrzeugs (100) und/oder eine einen Schwellenwert überschreitende Nickrate des Fahrzeugs (100) repräsentiert.

3. Verfahren (400) gemäß Anspruch 2, bei dem im Schritt des Bestimmens (420) der Zeitdifferenzwert (∆t) durch Halbieren des Ausgangswertes bestimmt wird.

4. Verfahren (400) gemäß einem der vorangegangenen Ansprüche, bei dem im Schritt des Bestimmens (420) das Eingangssignal (108) verwendet wird, um den Zeitdifferenzwert (∆t) abhängig von einer Rollrate des Fahrzeugs (100) und/oder einer Relativgeschwindigkeit zwischen dem Fahrzeug (100) und zumindest einem weiteren Fahrzeug zu bestimmen.

5. Verfahren (400) gemäß einem der vorangegangenen Ansprüche, mit einem Schritt des Änderns einer Bildwiederholrate der Kamera (104) unter Verwendung des Zeitdifferenzwertes (∆t), um das Bildsignal (106) zu empfangen.

6. Verfahren (400) gemäß Anspruch 5, bei dem im Schritt des Änderns die Bildwiederholrate derart geändert wird, dass die Einzelbilder (502; 602; 702; 900) der Bildsequenz um den Zeitdifferenzwert (∆t) zueinander versetzt sind.

7. Verfahren (400) gemäß einem der vorangegangenen Ansprüche, bei dem im Schritt des Detektierens (440) ein Teilausschnitt der Einzelbilder (502; 602; 702; 900) durchsucht wird, um die übereinstimmenden Pixel zu detektieren.

8. Vorrichtung (102) mit Einheiten (210, 220), die ausgebildet sind, um das Verfahren (400) gemäß einem der Ansprüche 1 bis 7 auszuführen und/oder anzusteuern.

9. Computerprogramm, das ausgebildet ist, um das Verfahren (400) gemäß einem der Ansprüche 1 bis 7 auszuführen und/oder anzusteuern.

10. Maschinenlesbares Speichermedium, auf dem das Computerprogramm nach Anspruch 9 gespeichert ist.

**Claims**

1. Method (400) for ascertaining an optical flow using an image sequence recorded by a camera (104) of a vehicle (100), wherein the method (400) comprises the following steps:

receiving (410) at least one input signal (108), which represents a vehicle environment and/or driving situation of the vehicle (100) recognized using at least one sensor (110) of the vehicle (100), and/or a result from a previous ascertainment of the optical flow, and an image signal (106) representing the image sequence;
determining (420) a time difference value (∆t) using the input signal (108);
selecting (430) at least two frames (502; 602; 702; 900) of the image sequence which are offset from one another by the time difference value (∆t), using the image signal (106); and
detecting (440) matching pixels in the frames (502; 602; 702; 900) in order to ascertain the optical flow using the matching pixels,
wherein, in the determination step (420), at least one further time difference value which deviates from the time difference value (∆t) is determined using the input signal (108), **characterized in that** the further time difference value represents a longer time difference than the time difference value (∆t), wherein, in the selection step (430), at least two further frames of the image sequence which are offset from one another by the further time difference value are selected, wherein, in the detection step (440), matching further pixels in the further frames are detected in order to ascertain the optical flow using the matching further pixels, wherein, in an evaluation step, the frames (502; 602; 702; 900) are evaluated in order to ascertain the optical flow for an ego-movement and surface estimation in a first region (902) of the vehicle environment, and the further frames are used to ascertain the optical flow for an estimation of the relative speed between the vehicle and vehicles driving in front in a second region (904) of the vehicle environment.

**2.** Method (400) according to Claim 1, wherein, in the determination step (420), the time difference value ($\Delta t$) is determined by reducing a starting value if the input signal (108) represents a recognized automatic emergency braking operation of the vehicle (100) and/or a pitch rate of the vehicle (100) that exceeds a threshold value.

**3.** Method (400) according to Claim 2, wherein, in the determination step (420), the time difference value ($\Delta t$) is determined by halving the starting value.

**4.** Method (400) according to any of the preceding claims, wherein, in the determination step (420), the input signal (108) is used to determine the time difference value ($\Delta t$) in dependence on a roll rate of the vehicle (100) and/or a relative speed between the vehicle (100) and at least one further vehicle.

**5.** Method (400) according to any of the preceding claims, comprising a step of changing a refresh rate of the camera (104) using the time difference value ($\Delta t$) in order to receive the image signal (106).

**6.** Method (400) according to Claim 5, wherein, in the changing step, the refresh rate is changed in such a way that the frames (502; 602; 702; 900) of the image sequence are offset from one another by the time difference value ($\Delta t$) .

**7.** Method (400) according to any of the preceding claims, wherein, in the detection step (440), a partial section of the frames (502; 602; 702; 900) is searched to find the matching pixels.

**8.** Apparatus (102) comprising units (210, 220) which are designed to carry out and/or control the method (400) according to any of Claims 1 to 7.

**9.** Computer program configured to carry out and/or control the method (400) according to any of Claims 1 to 7.

**10.** Machine-readable storage medium on which the computer program according to Claim 9 is stored.

**Revendications**

**1.** Procédé (400) de détermination d'un flux optique à l'aide d'une séquence d'images enregistrées par une caméra (104) d'un véhicule (100), le procédé (400) comprenant les étapes suivantes :

réception (410) d'au moins un signal d'entrée (108) qui représente un environnement de véhicule et/ou une situation de conduite du véhicule (100) reconnus en utilisant au moins un capteur (110) du véhicule (100) et/ou un résultat d'une identification précédente du flux optique, et d'un signal d'image (106) représentant la séquence d'images ;
détermination (420) d'une valeur de différence de temps ($\Delta t$) en utilisant le signal d'entrée (108) ;
sélection (430) d'au moins deux images individuelles (502 ; 602 ; 702 ; 900) de la séquence d'images décalées l'une par rapport à l'autre de la valeur de différence de temps ($\Delta t$) en utilisant le signal d'image (106) ; et
détection (440) de pixels coïncidants dans les images individuelles (502 ; 602 ; 702 ; 900) afin d'identifier le flux optique en utilisant les pixels coïncidants,
à l'étape de détermination (420), au moins une valeur de différence de temps supplémentaire, différente de la valeur de différence de temps ($\Delta t$), étant déterminée en utilisant le signal d'entrée (108), **caractérisé en ce que** la valeur de différence de temps supplémentaire représente une différence de temps plus longue que la valeur de différence de temps ($\Delta t$), au moins deux images individuelles supplémentaires de la séquence d'images, décalées l'une par rapport à l'autre de la valeur de différence de temps supplémentaire étant sélectionnées à l'étape de sélection (430), des pixels coïncidants supplémentaires étant détectés dans les images individuelles supplémentaires à l'étape de détection (440) afin de déterminer le flux optique en utilisant les pixels coïncidants supplémentaires, les images individuelles (502 ; 602 ; 702 ; 900) étant évaluées à une étape d'évaluation afin d'identifier le flux optique pour une estimation de mouvement propre et de surface dans une première zone (902) de l'environnement du véhicule, et les images individuelles supplémentaires étant utilisées pour identifier le flux optique pour une estimation de la vitesse relative entre le véhicule et les véhicules qui précèdent dans une deuxième zone (904) de l'environnement du véhicule.

**2.** Procédé (400) selon la revendication 1, avec lequel, à l'étape de détermination (420), la valeur de différence de temps ($\Delta t$) est déterminée en diminuant une valeur initiale lorsque le signal d'entrée (108) représente un freinage d'urgence automatique reconnu du véhicule (100) et/ou un taux de tangage du véhicule (100) qui dépasse une valeur de seuil

3. Procédé (400) selon la revendication 2, avec lequel, à l'étape de détermination (420), la valeur de différence de temps ($\Delta t$) est déterminée en divisant par deux la valeur initiale.

4. Procédé (400) selon l'une des revendications précédentes, avec lequel, à l'étape de détermination (420), le signal d'entrée (108) est utilisé pour déterminer la valeur de différence de temps ($\Delta t$) en fonction d'un taux de roulis du véhicule (100) et/ou d'une vitesse relative entre le véhicule (100) et au moins un véhicule supplémentaire.

5. Procédé (400) selon l'une des revendications précédentes, comprenant une étape de modification d'une fréquence de rafraîchissement de la caméra (104) en utilisant la valeur de différence de temps ($\Delta t$) pour recevoir le signal d'image (106).

6. Procédé (400) selon la revendication 5, avec lequel, à l'étape de modification, la fréquence de rafraîchissement est modifiée de telle sorte que les images individuelles (502 ; 602 ; 702 ; 900) de la séquence d'images sont décalées les unes par rapport aux autres de la valeur de différence de temps ($\Delta t$).

7. Procédé (400) selon l'une des revendications précédentes, avec lequel, à l'étape de détection (440), une portion partielle des images individuelles (502 ; 602 ; 702 ; 900) est parcourue afin de détecter les pixels coïncidants.

8. Dispositif (102) comprenant des unités (210, 220) qui sont configurées pour mettre en œuvre et/ou commander le procédé (400) selon l'une des revendications 1 à 7.

9. Programme informatique, qui est configuré pour mettre en œuvre et/ou commander le procédé (400) selon l'une des revendications 1 à 7.

10. Support de stockage lisible par machine, sur lequel est enregistré le programme informatique selon la revendication 9.

# Fig. 1

# Fig. 2

# Fig. 3

302

306  308  310

304

# Fig. 4

400

410

420

430

440

**Fig. 5**

500

502

504    506

504    506

EP 3 655 299 B1

Fig. 6

EP 3 655 299 B1

**Fig. 7**

Fig. 8

**Fig. 9**

# Fig. 10

1000    1002

504    506    504    506

EP 3 655 299 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1617376 A2

- EP 2899692 A1